# EUROPÄISCHE PATENTSCHRIFT

(11) **EP 1 510 282 B1**
(45) Veröffentlichungstag und Bekanntmachung des Hinweises auf die Patenterteilung: **09.07.2008**
(21) Anmeldenummer: 03019721.4
(22) Anmeldetag: 29.08.2003
(51) Int. Cl.: B23K 26/04

(54) **Vorrichtung zum Remote-Bearbeiten von Werkstücken mittels eines Laserbearbeitungsstrahls**
Device for remote machining workpieces with a laser machining beam
Dispositif d'usinage à distance de pièces au moyen d'un faisceau laser d'usinage

(43) Veröffentlichungstag der Anmeldung: 02.03.2005
(73) Patentinhaber: Trumpf Laser- und Systemtechnik GmbH, 71254 Ditzingen (DE)
(72) Erfinder: Horn, Armin, 71272 Renningen (DE); Andreasch, Wolfgang, 71384 Weinstadt (DE); Kaupp, Peter, 71069 Sindelfingen (DE)
(74) Vertreter: Kohler Schmid Möbus

(56) Entgegenhaltungen:
- US-A- 5 380 978
- US-A1- 2002 162 973
- PATENT ABSTRACTS OF JAPAN vol. 1999, no. 11, 30. September 1999 (1999-09-30) & JP 11 156578 A (HONDA MOTOR CO LTD), 15. Juni 1999 (1999-06-15)

## Beschreibung

Die Erfindung betrifft eine Vorrichtung zum Remote-Bearbeiten von Werkstücken mittels eines Laserbearbeitungsstrahls gemäß dem Oberbegriff des Anspruchs 1. Eine solche Vorrichtung ist aus der JP-A-11156578 bekannt.

Derartige Vorrichtungen werden etwa zum Laserschweißen oder Laserbeschriften von Werkstücken eingesetzt. Die Scanneroptik bekannter Vorrichtungen umfasst bewegliche Scannerspiegel, die mittels einer CNC-gesteuerten Stellvorrichtung derart einstellbar sind, dass sie den Laserbearbeitungsstrahl auf die jeweilige Bearbeitungsstelle an dem Werkstück richten. Der Laserbearbeitungsstrahl wird mit großer Brennweite fokussiert. Entsprechend weit ist die Scanneroptik von dem zu bearbeitenden Werkstück beabstandet.

Zum Programmieren der CNC-Steuerung für die Stellvorrichtung vorbekannter Scanneroptiken wird vor der eigentlichen Werkstückbearbeitung ein über die betreffende Scanneroptik geführter Richtlaserstrahl durch Einstellen der Scanneroptik mittels Joystick oder Tastatur in die künftige Bearbeitungsstelle bewegt. Derjenige Einstellwert der CNC-Steuerung für die Stellvorrichtung der Scanneroptik, welcher dem Sollverlauf des Richtlaserstrahls zugeordnet ist, wird in der CNC-Steuerung hinterlegt. Bei der nachfolgenden Werkstückbearbeitung mittels des Laserbearbeitungsstrahls wird auf den hinterlegten Einstellwert zurückgegriffen.

Den Stand der Technik dahingehend weiterzubilden, dass sich die Programmierung der numerischen Steuerung der Stellvorrichtung für die Scanneroptik vereinfacht, insbesondere beschleunigen lässt, hat sich die vorliegende Erfindung zum Ziel gesetzt.

Erfindungsgemäß gelöst wird diese Aufgabe durch die Vorrichtung nach Patentanspruch 1. Der demnach als Markiervorrichtung vorgesehene Zeiger bietet eine einfache Möglichkeit zur schnellen, handhabungsfreundlichen und exakten Definition der an dem Werkstück aufzunehmenden Bearbeitungsstelle. Zu erfassen ist die Zeigermarke, die bezüglich der Bearbeitungsstelle definiert angeordnet ist und deren Lage dementsprechend auch die Lage der Bearbeitungsstelle selbst wiedergibt. Aufgrund der Erfassung der eine Bearbeitungsstelle markierenden Zeigermarke wird ein Einstellwert für die Steuerung der Stellvorrichtung für die Scanneroptik definiert. Dieser Einstellwert wird in der genannten Steuerung hinterlegt. Bei der anschließenden Werkstückbearbeitung erfolgt die Positionierung der Scanneroptik unter Rückgriff auf den hinterlegten Einstellwert derart, dass sie den Laserbearbeitungsstrahl auf die zuvor mittels der Markiervorrichtung markierte Bearbeitungsstelle richtet.

Besondere Ausführungsarten der in Patentanspruch 1 beschriebenen Erfindung ergeben sich aus den abhängigen Patentansprüchen 2 bis 10.

Im Falle der Erfindungsbauart nach Patentanspruch 2 wird die Zeigermarke fortlaufend und somit auch dann detektiert, wenn sie keine Bearbeitungsstelle markiert. Nimmt die Zeigermarke eine Lage ein, in welcher sie die Lage einer Bearbeitungsstelle an dem Werkstück wiedergibt, so wird die Auswerteeinrichtung zur Definition eines Einstellwertes für die Steuerung der Stellvorrichtung für die Scanneroptik aktiviert. Die Auswerteeinrichtung befindet sich demnach in ständiger Bereitschaft und es bedarf zur Definition eines Einstellwertes lediglich noch einer auslösenden Maßnahme. Für die Programmierung der numerischen Steuerung für die Stellvorrichtung der Scanneroptik ergibt sich folglich ein ausgesprochen geringer Zeitbedarf.

Ebenfalls im Interesse einer schnellen und darüber hinaus auch im Interesse einer handhabungsfreundlichen Steuerungsprogrammierung ist an erfindungsgemäßen Vorrichtungen das kennzeichnende Merkmal von Patentanspruch 3 vorgesehen. Beispielsweise lässt sich das Schaltsignal zur Aktivierung der Auswerteeinrichtung mittels eines an dem Zeiger vorgesehenen Handschalters generieren. Das generierte Schaltsignal kann unterschiedlicher Natur sein. Denkbar sind etwa elektrische oder akustische Schaltsignale ebenso wie optische Schaltsignale der an der erfindungsgemäßen Vorrichtung nach Patentanspruch 4 erzeugten Art.

Als Markiervorrichtungen sind im Falle erfindungsgemäßer Vorrichtungen Zeiger unterschiedlicher Bauart möglich. An das Werkstück anlegbare taktile Zeiger (Patentanspruch 5) zeichnen sich durch eine besondere Handhabungsfreundlichkeit und durch eine besondere Genauigkeit bei der Markierung von Bearbeitungsstellen aus. Ist eine Werkstückberührung beispielsweise wegen Unzugänglichkeit der betreffenden Bearbeitungsstelle nicht möglich oder scheidet eine Werkstückberührung aus anderen Gründen aus, so kann erfindungsgemäß insbesondere auf einen Lichtzeiger mit einer Zeigermarke in Form einer Lichtmarke zurückgegriffen werden (Patentanspruch 6).

Ausweislich der Patentansprüche 7 und 8 sind im Falle bevorzugter Erfindungsbauarten optische Einrichtungen zur Erfassung der eine Bearbeitungsstelle markierenden Zeigermarke, inbesondere derartige optische Einrichtungen mit einer Kamera als Detektor für die Zeigermarke vorgesehen. Derartige Vorrichtungen haben sich in der Praxis vielfach bewährt. In Verbindung mit einer optischen Einrichtung zur Erfassung der Zeigermarke empfiehlt sich insbesondere die Generierung eines optischen Schaltsignals zur Aktivierung der Auswerteeinrichtung.

Durch eine besondere Zweckmäßigkeit unter konstruktiven Gesichtspunkten zeichnet sich die in Patentanspruch 9 beschriebene Erfindungsbauart aus. Im Falle dieser Vorrichtung übernimmt die Scanneroptik eine Doppelfunktion. Zum einen lenkt sie bei der Werkstückbearbeitung den Laserbearbeitungsstrahl zu der Bearbeitungsstelle an dem Werkstück; zum andern bildet sie eine Komponente der Einrichtung zur Programmierung der Steuerung ihrer eigenen Stellvorrichtung.

Erfindungsgemäß bevorzugt wird die Vorrichtung nach Patentanspruch 10. Nachdem die eine Bearbeitungsstelle markierende Zeigermarke mit der Bearbeitungsstelle und die optische Achse der Einrichtung zur Erfassung der Zeigermarke zwischen der Scanneroptik und dem Werkstück mit der Strahlachse des Laserbearbeitungsstrahles zusammenfallen, lässt sich zur Programmierung der Steuerung für die Stelleinrichtung der Scanneroptik unmittelbar der Einstellwert der genannten Steuerung zum Zeitpunkt der Erfassung der eine Bearbeitungsstelle markierenden Zeigermarke übernehmen.

Nachstehend wird die Erfindung anhand einer stark schematisierten Zeichnung zu einem Ausführungsbeispiel näher erläutert.

Dargestellt ist eine Vorrichtung 1 zum Remote-Schweißen ("Scannerschweißen") von Werkstücken, im gezeigten Beispielsfall eines dreidimensionalen Werkstückes 2. An dem Werkstück 2 zu erstellen sind vier Schweißpunkte an den Bearbeitungsstellen 3a, 3b, 3c, 3d.

Die Bearbeitung des Werkstückes 2 erfolgt mittels eines Laserbearbeitungsstrahles 4, der mit seiner gestrichelt wiedergegebenen Strahlachse dargestellt ist. Der Laserbearbeitungsstrahl 4 wird in einem nicht gezeigten CO₂-Laser erzeugt und zur Werkstückbearbeitung über einen teildurchlässigen Spiegel 5 sowie eine Scanneroptik 6 zu dem Werkstück 2 geführt. Auch andere Laserbauarten, etwa YAG-Laser, können zur Laserstrahlerzeugung dienen. Anstelle des teildurchlässigen Spiegels 5 wäre beispielsweise auch ein Lochspiegel denkbar. Die Scanneroptik 6 ist herkömmlicher Bauart und umfasst zwei Scannerspiegel 7, 8. Diese sind um Stellachsen 9, 10 beweglich und dadurch einstellbar. Die Einstellung der Scannerspiegel 7, 8 bzw. der Scanneroptik 6 erfolgt mittels einer elektromotorischen Stellvorrichtung 11, die ihrerseits über eine numerische Steuerung 12 verfügt.

Vor der Bearbeitung des Werkstückes 2 mit dem Laserbearbeitungsstrahl 4 ist die numerische Steuerung 12 der Stellvorrichtung 11 mittels einer Teacheinrichtung zu programmieren.

Bestandteil dieser Teacheinrichtung ist eine Markiervorrichtung in Form eines handgeführten taktilen Zeigers 13 ("Teachpointer") mit einer von einer Zeigerspitze 14 gebildeten Zeigermarke.

Teil der Teacheinrichtung ist weiterhin eine Einrichtung 15 zur Erfassung der Zeigerspitze 14. Die Einrichtung 15 umfasst eine CCD-Kamera 16 sowie als weitere Komponenten den teildurchlässigen Spiegel 5 sowie die Scanneroptik 6. Alternativ zu der CCD-Kamera 16 könnten beispielsweise auch eine Vierquadrantendiode oder ein PSD (Position Sensitive Detector) verwendet werden.

Eine optische Achse 17 der Einrichtung 15 zur Erfassung der Zeigerspitze 14 ist punktiert wiedergegeben. Zwischen dem teildurchlässigen Spiegel 5 und der Scanneroptik 6 sowie der Scanneroptik 6 und dem Werkstück 2 fallen die Strahlachse des Laserbearbeitungsstrahls 4 sowie die optische Achse 17 der Einrichtung 15 miteinander zusammen. Dieser Umstand wird durch die strichpunktierte Linie zwischen dem teildurchlässigen Spiegel 5 und der Zeigerspitze 14 veranschaulicht. Die Zeigerspitze 14 liegt in guter Näherung in der Bearbeitungsstelle 3a.

Eine Auswerteeinrichtung 18 ist einerseits mit dem Zeiger 13 und andererseits mit der numerischen Steuerung 12 der Stellvorrichtung 11 verbunden. Die Verbindung zwischen der Auswerteeinrichtung 18 und dem Zeiger 13 ist mittels eines Schalters 19 schaltbar. Auch die Auswerteeinrichtung 18 ist Teil der Teacheinrichtung für die Steuerung 12.

Zur Programmierung der numerischen Steuerung 12 der Stellvorrichtung 11 führt der Bediener den Zeiger 13 manuell an der Oberfläche des Werkstückes 2 entlang. An den Bearbeitungsstellen 3a, 3b, 3c, 3d, an denen Schweißpunkte zu erstellen sind, legt der Bediener den Zeiger 13 mit der Zeigerspitze 14 an das Werkstück 2 an. Während der Bewegung des Zeigers 13 zwischen den Bearbeitungsstellen 3a, 3b, 3c, 3d wird die Zeigerspitze 14 mittels der CCD-Kamera 16 über die Scannerspiegel 7, 8 der Scanneroptik 6 beobachtet. Die Spitzenerkennung erfolgt mittels Bildverarbeitung. Durch entsprechende Ansteuerung der numerischen Steuerung 12 der Stellvorrichtung 11 werden die Scannerspiegel 7, 8 automatisch derart eingestellt, dass die Zeigerspitze 14 stets in der Bildmitte abgebildet wird.

Mit Anlegen der Zeigerspitze 14 an den Bearbeitungsstellen 3a, 3b, 3c, 3d betätigt der Bediener jeweils den Schalter 19. Das dadurch generierte elektrische Schaltsignal aktiviert die Auswerteeinrichtung 18. Diese erfasst daraufhin denjenigen Einstellwert der numerischen Steuerung 12 für die Stellvorrichtung 11, welcher zum Zeitpunkt der Aktivierung der Auswerteeinrichtung 18 die Justierung der Scanneroptik 6 bewirkt. Auf diese Art und Weise definiert die Auswerteeinrichtung 18 nacheinander vier Einstellwerte für die numerische Steuerung 12, von denen jeder einer der Bearbeitungsstellen 3a, 3b, 3c, 3d zugeordnet ist. Diese Einstellwerte werden in einem Speicher 20 der numerischen Steuerung 12 hinterlegt, von wo aus sie bei der anschließenden Bearbeitung des Werkstückes 2 von einem Steuerrechner 21 zur Einstellung der Scanneroptik 6 abgerufen werden können. Eine zusammenhängende Schweißbahn lässt sich programmieren, indem der Zeiger 13 mit dauerhaft geschlossenem Schalter 19 über das Werkstück 2 bewegt wird.

Alternativ zu den gezeigten Verhältnissen kann die Auswerteeinrichtung 18 auch durch ein optisches Schaltsignal aktiviert werden. Dieses Schaltsignal lässt sich beispielsweise mittels einer schaltbaren Leuchtdiode an der Zeigerspitze 14 erzeugen. Es kann von der Einrichtung 15 zur Erfassung der Zeigerspitze 14 detektiert werden. Die optische Aktivierung der Auswerteeinrichtung 18 ist in der Darstellung durch die gestrichelte Linie zwischen der CCD-Kamera 16 und der Auswerteeinrichtung 18 veranschaulicht.

Für die nachfolgende Bearbeitung des Werkstückes 2 ist die numerische Steuerung 12 der Stellvorrichtung 11 über eine nicht gezeigte Verbindung mit der Lasersteuerung gekoppelt. Der Laserbearbeitungsstrahl 4 wird immer dann auf das Werkstück 2 gerichtet, wenn die Scanneroptik 6 derart eingestellt ist, dass der Laserstrahl 4 an der betreffenden Bearbeitungsstelle 3a, 3b, 3c, 3d auf das Werkstück 2 auftrifft.

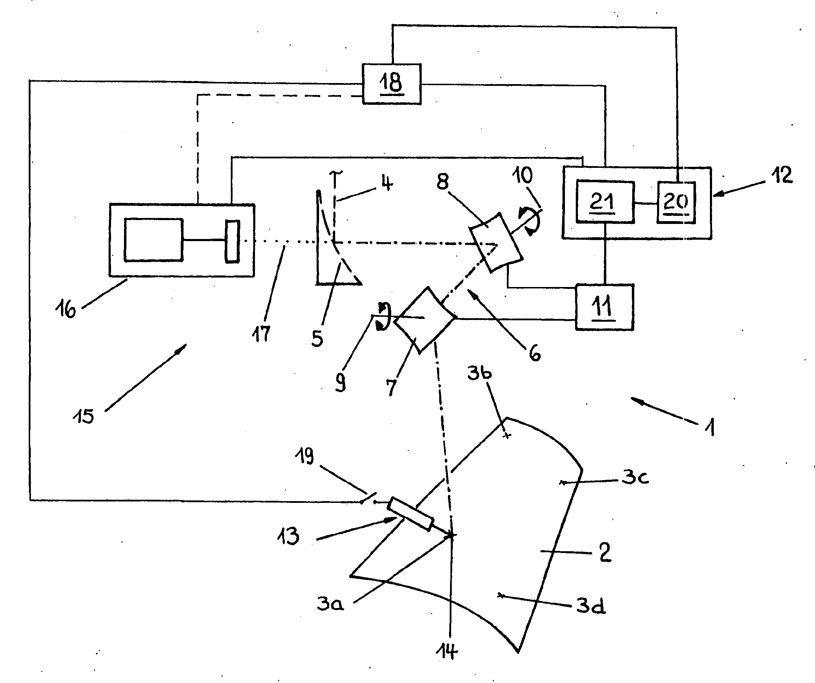

## Patentansprüche

1. Vorrichtung zum Remote-Bearbeiten von werkstücken (2) mittels eines Laserbearbeitungsstrahls (4), mit einer Scanneroptik (6), die mittels einer numerisch gesteuerten Stellvorrichtung (11) einstellbar ist, wobei der Laserbearbeitungsstrahl (4) mittels der eingestellten Scanneroptik (6) an wenigstens einer Bearbeitungsstelle (3a, 3b, 3c, 3d) auf das Werkstück (2) richtbar ist, wobei eine numerische Steuerung (12) der Stellvorrichtung (11) für die Scanneroptik (6) mittels einer Teacheinrichtung programmierbar ist und wobei die Teacheinrichtung eine Auswerteeinrichtung (18) umfasst, die mit der Steuerung (12) der Stellvorrichtung (11) für die Scanneroptik (6) in Verbindung steht und mittels derer ein Einstellwert für die Steuerung (12) der Stellvorrichtung (11) für die Scanneroptik (6) definierbar ist, der in der genannten Steuerung (12) hinterlegbar ist und aufgrund dessen die Scanneroptik (6) bei der werkstückbearbeitung derart eingestellt ist, dass sie den Laserbearbeitungsstrahl (4) auf die Bearbeitungsstelle (3a, 3b, 3c, 3d) richtet, **dadurch gekennzeichnet,**
**dass** die Teacheinrichtung
- eine zusätzlich zu der Scanneroptik vorgesehene Markiervorrichtung in Form eines Zeigers (13) mit einer Zeigermarke (14) zum Markieren wenigstens einer Bearbeitungsstelle (3a, 3b, 3c, 3d) an dem Werkstück (2) sowie
- eine Einrichtung (15) zur Erfassung der eine Bearbeitungsstelle (3a, 3b, 3c, 3d) markierenden Zeigermarke (14) als solche umfasst,
**dass** mittels der Auswerteeinrichtung (18) ein Einstellwert für die Steuerung (12) der Stellvorrichtung (11) für die Scanneroptik (6) aufgrund der Erfassung der eine Bearbeitungsstelle (3a, 3b, 3c, 3d) markierenden Zeigermarke (14) definierbar ist und dass aufgrund dieses Einstellwertes die Scanneroptik (6) bei der Werkstückbearbeitung derart eingestellt ist, dass sie den Laserbearbeitungsstrahl (4) auf die markierte Bearbeitungsstelle (3a, 3b, 3c, 3d) richtet.

2. Vorrichtung nach Anspruch 1, **dadurch gekennzeichnet, dass** die Zeigermarke (14) mittels der Einrichtung (15) zur Erfassung der eine Bearbeitungsstelle (3a, 3b, 3c, 3d) markierenden Zeigermarke (14) fortlaufend detektierbar ist und dass die Auswerteeinrichtung (18) zur Definition eines Einstellwertes für die Steuerung (12) der Stellvorrichtung (11) für die Scanneroptik (6) aktivierbar ist, sobald die Zeigermarke (14) eine Bearbeitungsstelle (3a, 3b, 3c, 3d) markiert. '

3. Vorrichtung nach einem der vorhergehenden Ansprüche, **dadurch gekennzeichnet, dass** die Auswerteeinrichtung (18) durch ein an dem Zeiger (13) generierbares Schaltsignal zur Definition eines Einstellwertes aktivierbar ist.

4. Vorrichtung nach einem der vorhergehenden Ansprüche, **dadurch gekennzeichnet, dass** die Auswerteeinrichtung (18) durch ein an dem Zeiger (13) generierbares optisches Schaltsignal zur Definition eines Einstellwertes aktivierbar ist.

5. Vorrichtung nach einem der vorhergehenden Ansprüche, **dadurch gekennzeichnet, dass** als Markiervorrichtung ein an das Werkstück (2) anlegbarer taktiler Zeiger (13) vorgesehen ist.

6. Vorrichtung nach einem der vorhergehenden Ansprüche, **dadurch gekennzeichnet, dass** als Markiervorrichtung ein Lichtzeiger mit einer Zeigermarke in Form einer Lichtmarke vorgesehen ist.

7. Vorrichtung nach einem der vorhergehenden Ansprüche, **dadurch gekennzeichnet, dass** als Einrichtung (15) zur Erfassung der eine Bearbeitungsstelle (3a, 3b, 3c, 3d) markierenden Zeigermarke (14) eine optische Einrichtung vorgesehen ist.

8. Vorrichtung nach einem der vorhergehenden Ansprüche, **dadurch gekennzeichnet, dass** die optische Einrichtung (15) zur Erfassung der eine Bearbeitungsstelle (3a, 3b, 3c, 3d) markierenden Zeigermarke (14) als Detektor für die Zeigermarke (14) eine Kamera (16) umfasst.

9. Vorrichtung nach einem der vorhergehenden Ansprüche, **dadurch gekennzeichnet, dass** die Scanneroptik (6) einen Teil der optischen Einrichtung (15) zur Erfassung der eine Bearbeitungsstelle (3a, 3b, 3c, 3d) markierenden Zeigermarke (14) bildet.

10. Vorrichtung nach einem der vorhergehenden Ansprüche, **dadurch gekennzeichnet, dass** die eine Bearbeitungsstelle (3a, 3b, 3c, 3d) markierende Zeigermarke (14) mit der Bearbeitungsstelle (3a, 3b, 3c, 3d) und eine optische Achse (17) der optischen Einrichtung (15) zur Erfassung der eine Bearbeitungsstelle (3a, 3b, 3c, 3d) markierenden Zeigermarke (14) zwischen der Scanneroptik (6) und der Zeigermarke (14)/Bearbeitungsstelle (3a, 3b, 3c, 3d) mit der Strahlachse des Laserbearbeitungsstrahls (4) zusammenfallen und dass mittels der Auswerteeinrichtung (18) aufgrund der Erfassung der eine Bearbeitungsstelle (3a, 3b, 3c, 3d) markierenden Zeigermarke (14) als hinterlegbarer Einstellwert für die Steuerung (12) der Stellvorrichtung (11) für die Scanneroptik (6) der Einstellwert der genannten Steuerung (12) zum Zeitpunkt der Erfassung der eine Bearbeitungsstelle (3a, 3b, 3c, 3d) markierenden Zeigermarke (14) definierbar ist.

## Claims

1. Device for remotely processing workpieces (2) by means of a laser processing beam (4), having an optical scanner unit (6) which can be adjusted by means of a numerically controlled adjustment device (11), with the laser processing beam (4) being able to be orientated towards the workpiece (2) by means of the adjusted optical scanner unit (6) at least at one processing location (3a, 3b, 3c, 3d), with a numerical control unit (12) of the adjustment device (11) for the optical scanner unit (6) being able to be programmed by means of a teaching device and the teaching device comprising an evaluation device (18) which is connected to the control unit (12) of the adjustment device (11) for the optical scanner unit (6) and by means of which an adjustment value can be defined for the control unit (12) of the adjustment device (11) for the optical scanner unit (6) which adjustment value can be stored in the said control unit (12) and the optical scanner unit (6) is adjusted on the basis of the adjustment value during the workpiece processing operation in such a manner that it orientates the laser processing beam (4) towards the processing location (3a, 3b, 3c, 3d), **characterised in that** the teaching device comprises
- a marking device which is provided in addition to the optical scanner unit and which is in the form of an indicator (13) having an indicator mark (14) for marking at least one processing location (3a, 3b, 3c, 3d) on the workpiece (2) and
- a device (15) for establishing the indicator mark (14) which marks a processing location (3a, 3b, 3c, 3d) as such,
**in that** an adjustment value can be defined by means of the evaluation device (18) for the control unit (12) of the adjustment device (11) for the optical scanner unit (6) on the basis of the establishment of the indicator mark (14) which marks a processing location (3a, 3b, 3c, 3d), and **in that**, on the basis of that adjustment value, the optical scanner unit (6) is adjusted during the workpiece processing operation in such a manner that it orientates the laser processing beam (4) towards the marked processing location (3a, 3b, 3c, 3d).

2. Device according to claim 1, **characterised in that** the indicator mark (14) can be continuously detected by means of the device (15) for establishing the indicator mark (14) which marks a processing location (3a, 3b, 3c, 3d), and **in that** the evaluation device (18) can be activated in order to define an adjustment value for the control unit (12) of the adjustment device (11) for the optical scanner unit (6) as soon as the indicator mark (14) marks a processing location (3a, 3b, 3c, 3d).

3. Device according to either of the preceding claims, **characterised in that** the evaluation device (18) can be activated by a switching signal which can be generated at the indicator (13) in order to define an adjustment value.

4. Device according to any one of the preceding claims, **characterised in that** the evaluation device (18) can be activated by an optical switching signal which can be generated at the indicator (13) in order to define an adjustment value.

5. Device according to any one of the preceding claims, **characterised in that** a tactile indicator (13) which can be positioned against the workpiece (2) is provided as the marking device.

6. Device according to any one of the preceding claims, **characterised in that** a light indicator having an indicator mark in the form of a light mark is provided as the marking device.

7. Device according to any one of the preceding claims, **characterised in that** an optical device is provided as the device (15) for establishing the indicator mark (14) which marks a processing location (3a, 3b, 3c, 3d).

8. Device according to any one of the preceding claims, **characterised in that** the optical device (15) for establishing the indicator mark (14) which marks a processing location (3a, 3b, 3c, 3d) comprises a camera (16) as a detector for the indicator mark (14).

9. Device according to any one of the preceding claims, **characterised in that** the optical scanner unit (6) forms a portion of the optical device (15) for establishing the indicator mark (14) which marks a processing location (3a, 3b, 3c, 3d).

10. Device according to any one of the preceding claims, **characterised in that** the indicator mark (14) which marks a processing location (3a, 3b, 3c, 3d) coincides with the processing location (3a, 3b, 3c, 3d) and an optical axis (17) of the optical device (15) for establishing the indicator mark (14) which marks a processing location (3a, 3b, 3c, 3d) between the optical scanner unit (6) and the indicator mark (14)/processing location (3a, 3b, 3c, 3d) coincides with the beam axis of the laser processing beam (4), and **in that** the adjustment value of the control unit (12) at the time at which the indicator mark (14) which marks a processing location (3a, 3b, 3c, 3d) is established can be defined by means of the evaluation device (18) on the basis of the establishment of the indicator mark (14) which marks a processing location (3a, 3b, 3c, 3d) as a storable adjustment value for the said control unit (12) of the adjustment device (11) for the optical scanner unit (6).

## Revendications

1. Dispositif pour l'usinage à distance de pièces (2) au moyen d'un faisceau laser d'usinage (4), avec une optique de balayage (6) qui est réglable au moyen d'un dispositif de réglage (11) à commande numérique, le faisceau laser d'usinage (4) pouvant être dirigé sur au moins un point d'usinage (3a, 3b, 3c, 3d) sur la pièce (2) au moyen de l'optique de balayage (6) réglée, une commande numérique (12) du dispositif de réglage (11) pour l'optique de balayage (6) étant programmable au moyen d'un équipement d'apprentissage et l'équipement d'apprentissage comprenant un équipement d'évaluation (18) qui est en liaison avec la commande (12) du dispositif de réglage (11) pour l'optique de balayage (6) et au moyen duquel une valeur de réglage pour la commande (12) du dispositif de réglage (11) pour l'optique de balayage (6) peut être définie, laquelle peut être enregistrée dans ladite commande (12) et sur la base de laquelle, lors de l'usinage de la pièce, l'optique de balayage (6) est réglée de façon à diriger le faisceau laser d'usinage (4) sur le point d'usinage (3a, 3b, 3c, 3d), **caractérisé en ce**
**que** l'équipement d'apprentissage comprend
- un dispositif de repérage, prévu en plus de l'optique de balayage, sous la forme d'un pointeur (13) avec un repère de pointeur (14) pour repérer au moins un point d'usinage (3a, 3b, 3c, 3d) sur la pièce (2) ainsi que
- un équipement (15) pour saisir en tant que tel le repère de pointeur (14) repérant un point d'usinage (3a, 3b, 3c, 3d),
**qu'**une valeur de réglage pour la commande (12) du dispositif de réglage (11) pour l'optique de balayage (6) peut être définie au moyen de l'équipement d'évaluation (18) sur la base de la saisie du repère de pointeur (14) repérant un point d'usinage (3a, 3b, 3c, 3d) et que, lors de l'usinage de la pièce, l'optique de balayage (6) est réglée sur la base de cette valeur de réglage de façon à diriger le faisceau laser d'usinage (4) sur le point d'usinage (3a, 3b, 3c, 3d) repéré.

2. Dispositif selon la revendication 1, **caractérisé en ce que** le repère de pointeur (14) peut être détecté en continu au moyen de l'équipement (15) de saisie du repère de pointeur (14) repérant un point d'usinage (3a, 3b, 3c, 3d) et que l'équipement d'évaluation (18) destiné à la définition d'une valeur de réglage pour la commande (12) du dispositif de réglage (11) pour l'optique de balayage (6) peut être activé dès que le repère de pointeur (14) repère un point d'usinage (3a, 3b, 3c, 3d).

3. Dispositif selon l'une des revendications précédentes, **caractérisé en ce que** l'équipement d'évaluation (18) peut être activé pour la définition d'une valeur de réglage par un signal de commutation pouvant être généré sur le pointeur (13).

4. Dispositif selon l'une des revendications précédentes, **caractérisé en ce que** l'équipement d'évaluation (18) peut être activé pour la définition d'une valeur de réglage par un signal de commutation optique pouvant être généré sur le pointeur (13).

5. Dispositif selon l'une des revendications précédentes, **caractérisé en ce qu'**il est prévu un pointeur (13) tactile applicable sur la pièce (2) comme dispositif de repérage.

6. Dispositif selon l'une des revendications précédentes, **caractérisé en ce qu'**il est prévu un pointeur lumineux avec un repère de pointeur sous la forme d'un repère lumineux comme dispositif de repérage.

7. Dispositif selon l'une des revendications précédentes, **caractérisé en ce qu'**il est prévu un équipement optique comme équipement (15) pour la saisie du repère de pointeur (14) repérant un point d'usinage (3a, 3b, 3c, 3d).

8. Dispositif selon l'une des revendications précédentes, **caractérisé en ce que** l'équipement optique (15) pour la saisie du repère de pointeur (14) repérant un point d'usinage (3a, 3b, 3c, 3d) comprend une caméra (16) comme détecteur pour le repère de pointeur (14).

9. Dispositif selon l'une des revendications précédentes, **caractérisé en ce que** l'optique de balayage (6) forme une partie de l'équipement optique (15) pour la saisie du repère de pointeur (14) repérant un point d'usinage (3a, 3b, 3c, 3d).

10. Dispositif selon l'une des revendications précédentes, **caractérisé en ce que** le repère de pointeur (14) repérant un point d'usinage (3a, 3b, 3c, 3d) coïncide avec le point d'usinage (3a, 3b, 3c, 3d) et un axe optique (17) de l'équipement optique (15) pour la saisie du repère de pointeur (14) repérant un point d'usinage (3a, 3b, 3c, 3d) entre l'optique de balayage (6) et le repère de pointeur (14)/point d'usinage (3a, 3b, 3c, 3d) avec l'axe de faisceau du faisceau laser d'usinage (4) et qu'au moyen de l'équipement d'évaluation (18), sur la base de la saisie du repère de pointeur (14) repérant un point d'usinage (3a, 3b, 3c, 3d), la valeur de réglage de la commande (12) du dispositif de réglage (11) pour l'optique de balayage (6) à l'instant de la saisie du repère de pointeur (14) repérant un point d'usinage (3a, 3b, 3c, 3d) peut être définie comme valeur de réglage enregistrable pour ladite commande (12).
